# EUROPÄISCHE PATENTANMELDUNG

(11) **EP 3 079 242 A1**
(43) Veröffentlichungstag der Anmeldung: **12.10.2016**
(21) Anmeldenummer: 15163237.9
(22) Anmeldetag: 10.04.2015
(51) Int. Cl.: H02K 19/16, H02K 15/095, H02K 3/18

(54) **HERSTELLUNGSVERFAHREN EINER WICKLUNG UM EINEN AUSSPRINGENDEN POL FÜR EINE SYNCHRONMASCHINE**

(71) Anmelder: Siemens Aktiengesellschaft, 80333 München (DE)
(72) Erfinder: Kümmlee, Horst, 13505 Berlin (DE)

(57) **Zusammenfassung**

Die Erfindung betrifft ein Herstellungsverfahren eines Rotors (1) für eine Synchronmaschine (29), wobei der Rotor mindestens eine Erregerspule (2) aufweist, wobei diese Erregerspule (2) jeweils mindestens zwei Windungen (3) aufweist, welche aus mehreren parallelen elektrisch leitfähig verbundenen rechteckförmigen Teilleitern (15) bestehen. Damit der Rotor kostengünstig herzustellen ist und bei hohen Drehzahlen und den damit verbundenen hohen Fliehkraftbelastungen einsetzbar ist, wird vorgeschlagen die Erregerspule (2) mit einem kontinuierlichen Wickel- und Lötverfahren derart herzustellen, dass zuerst mehrere parallele rechteckförmige Teilleiter (15) der Länge nach lose zu einem Gesamtleiter (16) zusammengefügt werden, danach der Gesamtleiter (16) zu einer Erregerspule (2) gewickelt wird und die Teilleiter (15) des Gesamtleiters (16) quasi gleichzeitig mit dem Wicklungsschritt kontinuierlich zu einem biegesteifen Gesamtleiter (16) der massiven Erregerspule (2) zusammengelötet werden.

## Beschreibung

Die Erfindung betrifft ein Verfahren zur Herstellung eines Rotors für eine Synchronmaschine, aufweisend mindestens eine Erregerspule, wobei die mindestens eine Erregerspule jeweils mindestens zwei Windungen aufweist, welche aus mehreren parallelen elektrisch leitfähig verbundenen rechteckförmigen Teilleitern bestehen.

Die Erfindung betrifft weiterhin einen Rotor für eine Synchronmaschine, welcher mit einem derartigen Verfahren herstellbar ist.

Ferner betrifft die Erfindung eine Synchronmaschine, welche mindestens einen derartigen Rotor aufweist.

Elektrische rotierende Maschinen sind beispielsweise als Synchronmaschinen, insbesondere als Drehstromsynchronmaschinen, ausgebildet. Derartige Drehstromsynchronmaschinen können beispielsweise als Motor oder auch als Generator betrieben werden. Elektrische Maschinen, insbesondere solche, die als Hochdrehzahlantriebe mit einer Drehzahl von mehr als 1000 U/min und mit großer Leistung, beispielsweise mehr als ein Megawatt, ausgeführt sind, müssen hohe Anforderungen an die elektromagnetischen und an die mechanischen Eigenschaften erfüllen.

Bei Synchronmaschinen kann der Rotor, welcher auch Läufer genannt wird, Permanentmagnete oder Elektromagnete aufweisen. Kommen auf dem Rotor Permanentmagnete, insbesondere an seinem Außenumfang zum Einsatz, so spricht man von einer permanenterregten Synchronmaschine, wobei aus der Verwendung von Permanentmagneten eine eingeschränkte mechanische Festigkeit resultiert. Eine hohe Drehzahl kann aufgrund der dann auftretenden sehr starken Fliehkräfte zu einem Ablösen oder einem Verformen der Oberflächen-Permanentmagnete führen. Kommt beim Rotor ein Elektromagnet zum Einsatz, spricht man von einer fremderregten Synchronmaschine. Insbesondere bei hohen Leistungen muss ein Leiter des Elektromagneten die notwendige Biegetragfähigkeit für die auftretenden Fliehkraftbelastungen aufweisen.

Aus EP 1 287 601 B1 ist eine Wicklung für einen Ständer oder Läufer einer elektrischen Maschine mit einem Eisenkörper mit Nuten, welche zumindest teilweise aus L-förmigen Formteilen aufgebaut ist, bekannt. Hierbei bildet jeweils ein Schenkel eines L-förmigen Formteils einen in einer Nut liegenden Nutstab und der andere Schenkel einen an einer Stirnseite des Ständers bzw. Läufers liegenden Verbindungsleiter.

Der Erfindung liegt die Aufgabe zugrunde, ein Verfahren zur Herstellung eines Rotors der eingangs genannten Art bereitzustellen, welcher, im Vergleich zum Stand der Technik, kostengünstig herzustellen ist und der auch bei hohen Drehzahlen und den damit verbundenen hohen Fliehkraftbelastungen sicher einsetzbar ist.

Diese Aufgabe wird durch ein Verfahren zur Herstellung eines Rotors für eine Synchronmaschine, aufweisend mindestens eine Erregerspule, wobei die mindestens eine Erregerspule jeweils mindestens zwei Windungen aufweist, welche aus mehreren parallelen elektrisch leitfähig verbundenen rechteckförmigen Teilleitern bestehen, dadurch gelöst, die Erregerspule mit einem kontinuierlichen Wickel- und Lötverfahren derart hergestellt wird, dass die mehreren parallelen rechteckförmigen Teilleiter zuerst längsseitig lose zu einem Gesamtleiter zusammengefügt werden, daraufhin der Gesamtleiter zu einer Erregerspule gewickelt wird und die Teilleiter des Gesamtleiters direkt nach der Wicklung kontinuierlich zu einer massiven Erregerspule mit einem biegesteifen Gesamtleiter zusammengelötet werden.

Weiterhin wird die Aufgabe durch einen Rotor für eine Synchronmaschine gelöst, welcher mit einem derartigen Verfahren herstellbar ist, aufweisend mindestens eine Erregerspule, wobei die Erregerspule mehrere längsseitig elektrisch leitfähig verbundene rechteckförmige Teilleiter aufweist und wobei jeder Teilleiter einstückig ausgebildet ist.

Ferner wird die Aufgabe durch eine Synchronmaschine gelöst, welche mindestens einen derartigen Rotor aufweist.

Durch ein derartiges kontinuierliches Wickel- und Lötverfahren der parallelen rechteckförmigen Teilleiter zu einem biegesteifen Gesamtleiter sind keine maßgefertigten Formteile der Spulenseiten, welche ansonsten mit einem aufwendigen Positionier- und Lötverfahren zusammengefügt werden müssten, erforderlich, was bei der Herstellung zu einer Einsparung von Kosten führt. Die löttechnische Verbindung von parallelen einstückig ausgebildeten Strängen zu einem biegesteifen Gesamtleiter gewährleistet eine schubsteife Verbindung und ermöglicht durch die erhöhte Stabilität den Einsatz des Rotors bei hohen Leistungen und großen Drehzahlen und den damit verbundenen hohen Fliehkraftbelastungen. Das Zusammenfügen von rechteckförmigen Teilleitern zu einem Gesamtleiter ermöglicht weiterhin die Fertigung von unterschiedlichen Leitergeometrien. Die Zu- und Ableitungen der Spulenenden lassen sich ohne Einsatz zusätzlicher Verbindungsteile nach dem gleichen Prozess mitintegrieren.

Bevorzugt erfolgt die Wicklung der lose zusammengefügten Teilleiter mit mindestens einem Wickeldorn. Dadurch lässt sich besonders einfach die gewünschte Spulengeometrie herstellen.

In einer bevorzugten Ausführung werden die Teilleiter mit einem Weichlotverfahren zusammengelötet. Da die mechanischen Belastungen zwischen den parallelen rechteckförmigen Teilleitern nicht sehr hoch sind, reicht ein Weichlotverfahren aus, diese zu einem biegesteifen Gesamtleiter zusammenzuhalten. Auf diese Weise werden Putz- und Reinigungsarbeiten minimiert. Mit entsprechenden Vorrichtungen lässt sich so eine komplette Polspule mit allen Windungen in einem kontinuierlichen Fertigungsprozess herstellen.

Bei einer weiteren vorteilhaften Ausgestaltung werden die Teilleiter während des kontinuierlichen Lötvorgangs von einer Formierungseinrichtung positioniert und/oder zusammengehalten. Dies stellt sicher, dass die Teilleiter präzise in der gewünschten Form positioniert und verlötet bleiben, solange das Lötzinn noch nicht abgekühlt ist. Durch die Formierungseinrichtung wird demnach die Genauigkeit der Fertigung erhöht.

Bevorzugt wird zwischen den mindestens zwei Windungen eine Isolation eingesetzt, welche einen hochspannungsfesten elektrisch isolierenden Kunststoff, insbesondere Aramid, aufweist und welche dafür geeignet ist, die mindestens zwei Windungen gegeneinander zu isolieren. Dies ist besonders vorteilhaft, da sich auf diese Weise eine kompakte, hochspannungsfeste und verlustarme Spule realisieren lässt.

In einer bevorzugten Ausführung werden die parallelen rechteckförmigen Teilleiter aus Standardhalbzeugen, insbesondere aus Kupfer, hergestellt. Diese Standardhalbzeuge können beispielsweise Rechteckdrähte sein. Dies ist vorteilhaft, da so auf maßgefertigte Formteile verzichtet werden kann, was zu einer Kostenersparnis führt.

Besonders vorteilhaft wird an mindestens einem äußeren Teilleiter eine Kühlfahne aus einem Teil des Teilleiters geformt. Dies erhöht die Oberfläche des Leiters was sich vorteilhaft auf die Kühlung der stromdurchflossenen Erregerspule auswirkt. Eine geringere Temperatur führt zu geringeren Verlusten in der Erregerspule, da der spezifische Widerstand von Kupfer mit der Temperatur steigt. Im Vergleich zur bisherigen Lösung, bei der die Erregerspule abwechselnd mit zwei unterschiedlich breiten Kupferleitern, einer Kühlwindung und einer Normalwindung, bewickelt wurde, ist der Aufwand der technischen Realisierung deutlich geringer, woraus sich eine Kostenersparnis ergibt.

Bevorzugt wird die Kühlfahne mit einem Quetschwerkzeug geformt. Die Formung von bevorzugt örtlich in regelmäßigen Abständen angeordneten Kühlfahnen mit einem geeigneten Quetschwerkzeug ist besonders einfach, kostengünstig und gut reproduzierbar.

Bei einer weiteren vorteilhaften Ausgestaltung werden zumindest ein Teil eines Polschuhs und zumindest ein Teil eines Blechpakets des Rotors aus einem Stück hergestellt und die Erregerspule wird direkt um das Blechpaket mit dem Polschuh gewickelt. Das Blechpaket mit dem Polschuh, welche aus einem Stück herstellt sind, kann hierbei aus mehreren in axialer Richtung gestapelten Blechen bestehen. Die Erregerspule wird direkt um das Blechpaket mit dem integrierten Polschuh gewickelt. Demnach ist es nicht erforderlich, den Polschuh, beispielsweise mit Schrauben, am Blechpaket mechanisch zu befestigen. Dies führt zu einer verbesserten Stabilität insbesondere bei hohen Drehzahlen, da gerade bei hohen Drehzahlen der Polschuh mit den Schrauben hohen Fliehkräften ausgesetzt ist.

In einer bevorzugten Ausführung weisen die Wicklungen der Erregerspule an den Ecken eine abgerundete Radiusform auf. Dadurch werden Kerbbeanspruchungen in den Ecken vermieden.

Im Folgenden wird die Erfindung anhand der in den Figuren dargestellten Ausführungsbeispiele näher beschrieben und erläutert.

Es zeigen:
- FIG 1: eine dreidimensionale Darstellung eines Rotors einer Synchronmaschine nach dem Stand der Technik,
- FIG 2: einen Querschnitt des Rotors aus FIG 1,
- FIG 3: eine dreidimensionale Darstellung einer Erregerspule nach dem Stand der Technik,
- FIG 4: eine dreidimensionale Darstellung eines kontinuierlichen Wickel- und Lötverfahrens einer Erregerspule mit 1x3 Teilleitern,
- FIG 5: eine dreidimensionale Darstellung eines kontinuierlichen Wickel- und Lötverfahrens einer Erregerspule mit 2x2 Teilleitern
- FIG 6: eine dreidimensionale Darstellung eines Teils einer Erregerspule mit 1x3 Teilleitern,
- FIG 7: eine dreidimensionale Darstellung eines Teils einer Erregerspule mit 2x2 Teilleitern,
- FIG 8: einen Querschnitt eines Teils eines Rotors einer Synchronmaschine mit Erregerspulen mit 2x2 Teilleitern,
- FIG 9: eine dreidimensionale Darstellung eines Teils einer Erregerspule mit 1x3 Teilleitern und Kühlfahnen und
- FIG 10: einen Querschnitt einer Synchronmaschine.

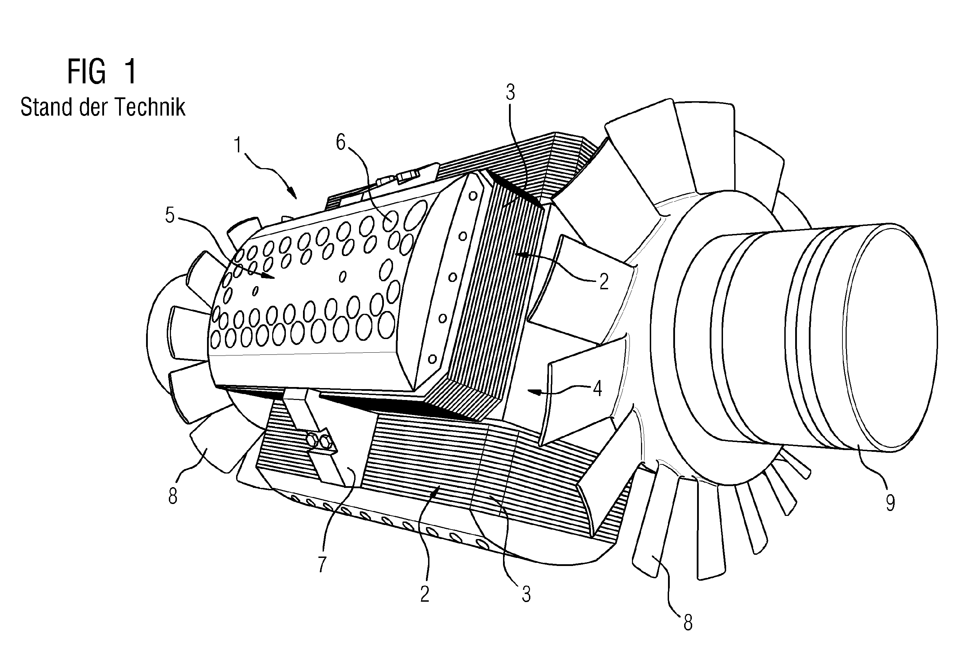

FIG 1 zeigt eine dreidimensionale Darstellung eines Rotors 1 einer Synchronmaschine 29 nach dem Stand der Technik. Derartige Drehstromsynchronmaschinen können beispielsweise als Motor oder auch als Generator betrieben werden. Die Synchronmaschine 29 ist insbesondere als Hochdrehzahlantrieb mit einer Drehzahl von mehr als 1000 U/min bei einer hohen Leistung von mehr als ein Megawatt, ausgeführt. Daraus und durch die sich ergebenden sehr starken Fliehkräfte, welche bei derartig hohen Drehzahlen auftreten, hohe Anforderungen an die elektromagnetischen und an die mechanischen Eigenschaften des Rotors 1. Es handelt sich exemplarisch um einen vierpoligen Rotor 1 mit Fremderregung, wobei die vier Erregerspulen 2 um 90° versetzt angeordnet sind. Die Erregerspulen 2 weisen Wicklungen 3 auf, welche um ein Blechpaket 4, welches bevorzugt aus Eisen besteht, gewickelt sind. Jede Erregerspule 2 wird in radialer Richtung von einem Polschuh 5 gehalten, welcher mit Schrauben 6 am Blechpaket 4 befestigt ist. Weiterhin hat der Polschuh 5 die Aufgabe, die magnetischen Feldlinien der stromdurchflossenen Erregerspule 2 in einer definierten Form heraustreten zu lassen und zu verteilen. Wicklungsstützen 7 stabilisieren die Erregerspulen 2 zusätzlich. Eine Welle 9 ist mit dem Blechpaket 4 des Rotors 1 drehfest verbunden. Das Blechpaket 4 mit den Erregerspulen 2 wird durch einen Lüfter 8 gekühlt. Um Kerbbeanspruchungen in den Ecken zu vermeiden, sind die Wicklungen 3 der Erregerspulen 2 oktogonal oder achteckig gewickelt.

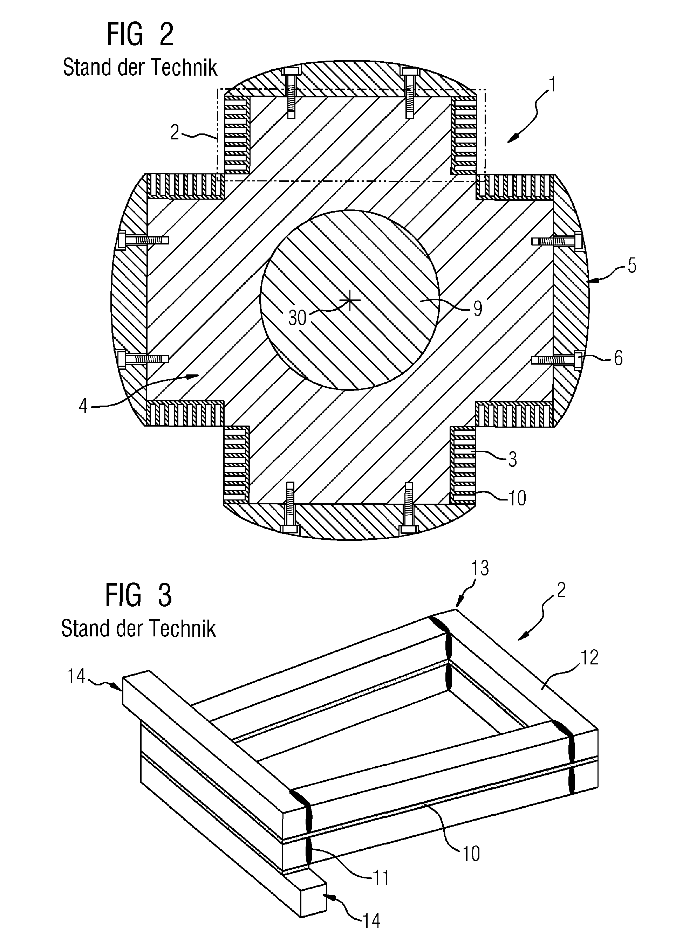

FIG 2 zeigt einen Querschnitt des Rotors 1 aus FIG 1. Die exemplarisch vier orthogonal zueinander angeordneten Erregerspulen 2 werden in radialer Richtung von jeweils einem Polschuh 5 gehalten, welcher mit Schrauben 6 am Blechpaket 4 befestigt ist. Die Welle ist drehfest und bevorzugt stoffschlüssig mit dem Blechpaket 4 des Rotors 1 verbunden. Die einzelnen Wicklungen 3 der Erregerspulen 2 bestehen bevorzugt aus Kupfer und sind durch eine Isolation 10 voneinander und vom Blechpaket 4 elektrisch isoliert. Neben den Erregerspulen 2 tragen auch die Polschuhe 5 mit ihrem näherungsweise pilzförmigen Querschnitt dazu bei, das Magnetfeld zu verteilen, damit der Rotor 1 ein möglichst homogenes Magnetfeld erzeugt.

FIG 3 zeigt eine dreidimensionale Darstellung einer Erregerspule 2 nach dem Stand der Technik. Es sind exemplarisch zwei Wicklungen 3 der Erregerspule 2 gezeigt. Die viereckige Erregerspule 2 besteht aus einzelnen Kupferformprofilen 12, beispielsweise Flachkupfer, welche aus Formprofilen ausgeschnitten werden und anschließend an den vier Ecken 13 stirnseitig mit einer Ecklötung 11 zu einer kontinuierlichen Spule zusammengelötet werden. Die einzelnen Wicklungen 3 der Erregerspule 2 sind durch eine Isolation 10 voneinander elektrisch isoliert. Die Einspeisung des Stromes in die Erregerspule 2 erfolgt über Zuleitungen 14. Das Herstellungsverfahren einer Erregerspule 2 wie sie in FIG 3 gezeigt ist, ist sehr zeit- und kostenintensiv. Im Bereich der Ecken 13 treten hohe Kerbspannungen auf.

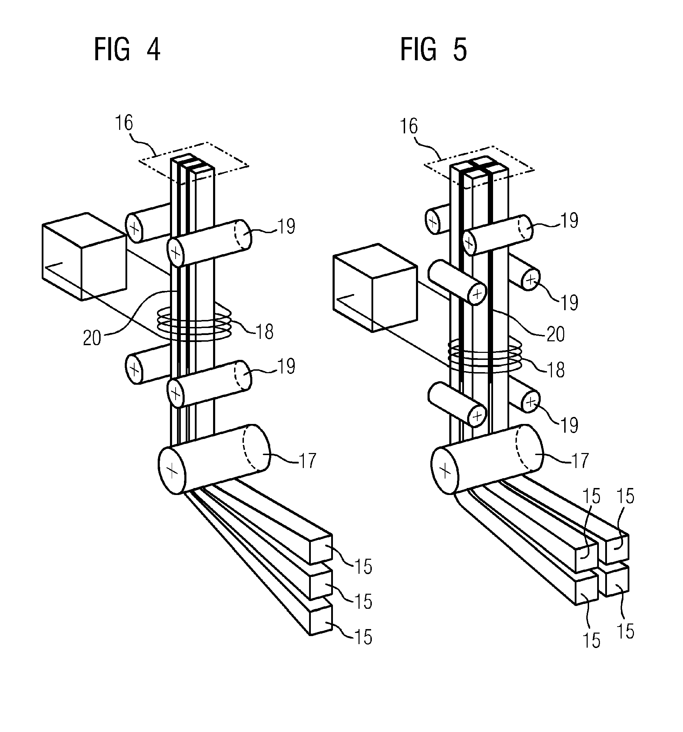

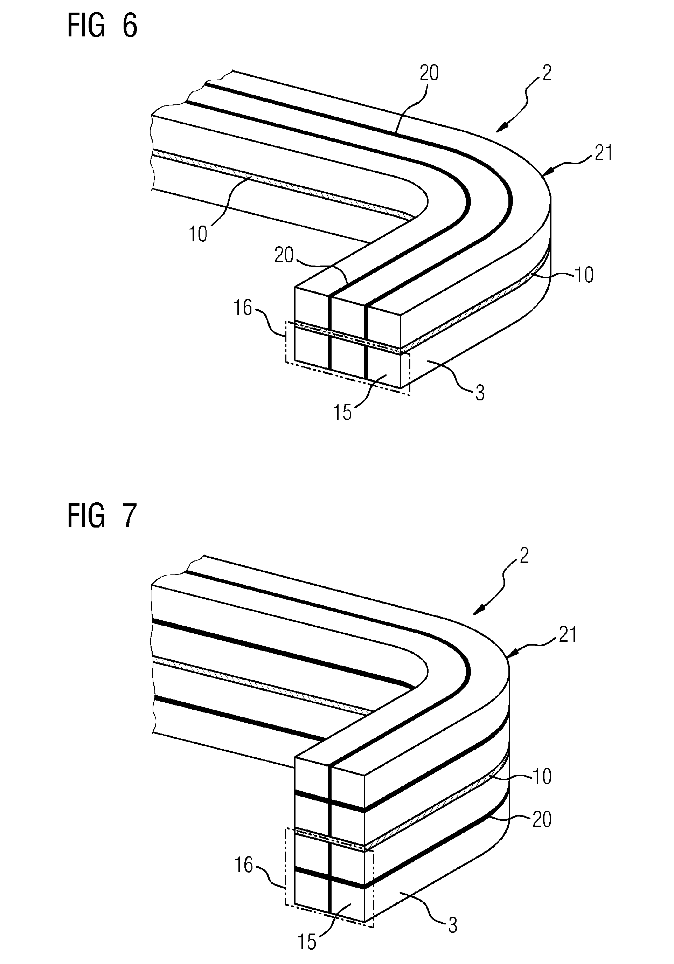

FIG 4 zeigt eine dreidimensionale Darstellung eines kontinuierlichen Wickel- und Lötverfahrens einer Erregerspule 2 mit 1x3 Teilleitern 15, wobei die Teilleiter 15 übereinander liegen und eine identische bevorzugt quadratische Querschnittsfläche aufweisen. Die parallelen rechteckförmigen Teilleiter 15 können bevorzugt aus Standardhalbzeugen, insbesondere aus Kupfer, hergestellt werden und werden im ersten Schritt längsseitig lose zu einem Gesamtleiter 16 zusammengefügt. Durch die Verbindung mehrerer Teilleiter 15, welche in ihrer vollen Länge einstückig ausgebildet sind, zu einem Gesamtleiter 16 ist die Fertigung von unterschiedlichen Leitergeometrien möglich. Nach dem Zusammenfügen der Teilleiter 15 wird der entstandene lose verbundene Gesamtleiter 16 mit einem Wickeldorn 17 zu einer Erregerspule 2 (siehe FIG 6) gewickelt. Die Teilleiter 15 des Gesamtleiters 16 werden daraufhin direkt nach der Wicklung kontinuierlich zu einer massiven Erregerspule 2 mit einem biegesteifen Gesamtleiter 16 zusammengelötet. Das Zusammenlöten der parallelen Stränge mit einem Lot 20 ist notwendig, um eine schubsteife Verbindung zu gewährleisten, die dem so verbundenen Gesamtleiter 16 die notwendige Biegetragfähigkeit für die auftretenden Fliehkraftbelastungen gibt. Da diese "inneren" Belastungen nicht sehr hoch sind, reicht ein Weichlotverfahren aus, um die Putz- und Reinigungsarbeiten zu minimieren. Während des kontinuierlichen Lötvorgangs werden die Teilleiter 15 von Formierungseinrichtungen 19 in der gewünschten Position zusammengehalten. Das in FIG 4 gezeigte Fertigungsverfahren ist sowohl für Schenkelpolmaschinen als auch bei Vollpolmaschinen anwendbar.

FIG 5 zeigt eine dreidimensionale Darstellung eines kontinuierlichen Wickel- und Lötverfahrens einer Erregerspule 2 mit 2x2 Teilleitern 15. Das Herstellungsverfahren entspricht dem in FIG 4 gezeigten Verfahren, wobei in FIG 4 exemplarisch vier quadratische Teilleiter 15 mit identischer Querschnittsfläche zu einem quadratischen Gesamtleiter 16 verarbeitet werden. Entsprechend müssen die Teilleiter 15 von zwei Seiten längsseitig lose zu einem Gesamtleiter 16 zusammengefügt werden. Nach dem Zusammenfügen der Teilleiter 15 wird der entstandene lose verbundene quadratischen Gesamtleiter 16 mit einem Wickeldorn 17 zu einer Erregerspule 2 (siehe FIG 6) gewickelt und direkt nach der Wicklung kontinuierlich zu einer massiven Erregerspule 2 zusammengelötet. Während des kontinuierlichen Lötvorgangs werden die 2x2 Teilleiter 15 von Formierungseinrichtungen 19 von zwei Seiten in der gewünschten Position zusammengehalten. Das in FIG 5 gezeigte Fertigungsverfahren ist sowohl für Schenkelpolmaschinen als auch bei Vollpolmaschinen anwendbar.

FIG 6 zeigt eine dreidimensionale Darstellung eines Teils einer Erregerspule 2 mit 1x3 Teilleitern, welche exemplarisch zwei Windungen 3 aufweist, wobei der Gesamtleiter 16 mit dem in FIG 4 gezeigten kontinuierlichen Wickel- und Lötverfahren hergestellt wurde. Zwischen den beiden dargestellten Windungen 3 wird eine Isolation 10 eingesetzt, welche einen hochspannungsfesten elektrisch isolierenden Kunststoff, insbesondere Aramid, aufweist und welche dafür geeignet ist, die beiden Windungen 3 gegeneinander zu isolieren. Die Wicklungen 3 der Erregerspule 2 weisen an den Ecken eine günstige abgerundete Radiusform 21 auf, wodurch eine Kerbbeanspruchung in den Ecken vermieden wird. Zu- und Ableitungen an den Enden der Erregerspule 2 sind ohne Einsatz zusätzlicher Verbindungsteile nach dem gleichen Prozess mit integrierbar.

FIG 7 zeigt eine dreidimensionale Darstellung eines Teils einer Erregerspule 2 mit 2x2 Teilleitern, welche exemplarisch zwei Windungen 3 aufweist, wobei der quadratische Gesamtleiter 16 mit dem in FIG 5 gezeigten kontinuierlichen Wickel- und Lötverfahren hergestellt wurde. Analog zu FIG 6 wird zwischen den beiden dargestellten Windungen 3 eine Isolation 10 eingesetzt, welche einen hochspannungsfesten elektrisch isolierenden Kunststoff, insbesondere Aramid, aufweist und welche dafür geeignet ist, die beiden Windungen 3 gegeneinander zu isolieren. Die Wicklungen 3 der Erregerspule 2 weisen an den Ecken eine günstige abgerundete Radiusform 21 auf, wodurch eine Kerbbeanspruchung in den Ecken vermieden wird. Zu- und Ableitungen an den Enden der Erregerspule 2 sind ohne Einsatz zusätzlicher Verbindungsteile nach dem gleichen Prozess mit integrierbar.

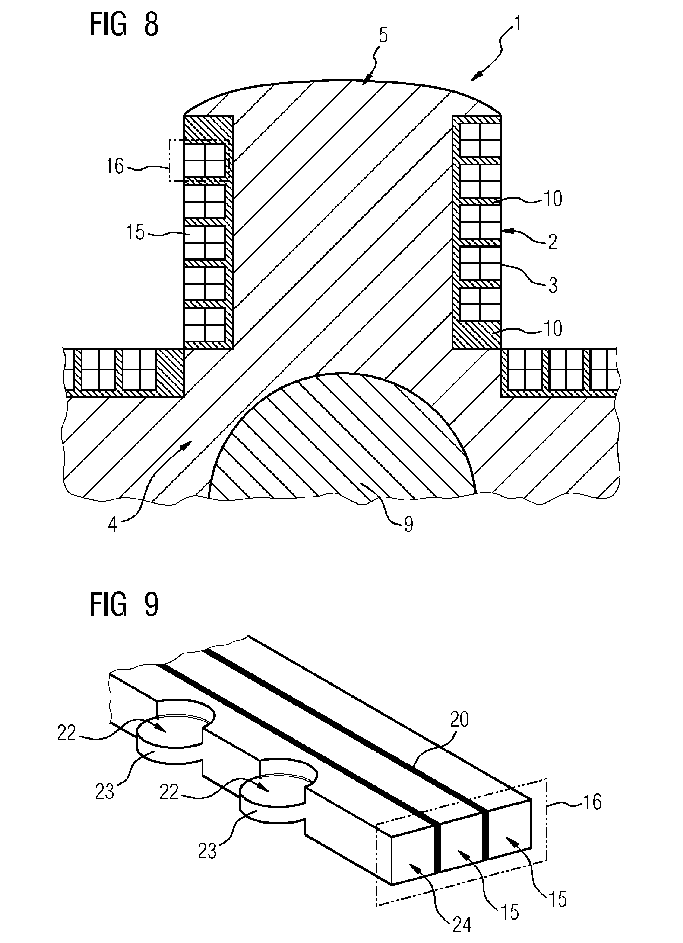

FIG 8 zeigt einen Querschnitt eines Teils eines Rotors einer Synchronmaschine mit Erregerspulen mit 2x2 Teilleitern. Es handelt sich exemplarisch um einen vierpoligen Rotor 1 mit Fremderregung, wobei die nur teilweise dargestellten vier Erregerspulen 2 um 90° versetzt angeordnet sind. Im Vergleich zu FIG 2 werden die exemplarisch vier Polschuhe 5 und das Blechpaket 4 des Rotors 1 aus einem Stück hergestellt. Das Blechpaket 4 kann in axialer Richtung mit den Polschuhen 5, welche aus einem Stück herstellt sind, aus mehreren Einzelblechen bestehen. Die Welle ist drehfest und bevorzugt stoffschlüssig mit dem Blechpaket 4 des Rotors 1 verbunden. Die Erregerspule wird direkt um das Blechpaket mit dem Polschuh gewickelt. Die Erregerspulen 2 werden direkt um das Blechpaket 4 mit den integrierten Polschuhen 5 gewickelt. Demnach ist es nicht erforderlich, wie in FIG 2 gezeigt, die Polschuhe 5, beispielsweise mit Schrauben 6, am Blechpaket 4 mechanisch zu befestigen. Dies führt zu einer verbesserten Stabilität insbesondere bei hohen Drehzahlen, da gerade bei hohen Drehzahlen die geschraubten Polschuhe 5 hohen Fliehkräften ausgesetzt sind. Die Gesamtleiter 16 der Erregerspulen 2 wurden mit dem in FIG 4 gezeigten kontinuierlichen Wickel- und Lötverfahren hergestellt. Die einzelnen Wicklungen 3 der Erregerspulen 2 bestehen bevorzugt aus Kupfer und sind durch eine Isolation 10 voneinander und vom Blechpaket 4 elektrisch isoliert. Neben den Erregerspulen 2 tragen auch die Polschuhe 5 mit ihrem näherungsweise pilzförmigen Querschnitt dazu bei, das Magnetfeld zu verteilen, damit der Rotor 1 ein möglichst homogenes Magnetfeld erzeugt.

FIG 9 zeigt eine dreidimensionale Darstellung eines Teils einer Erregerspule 2 mit 1x3 Teilleitern 15, 24 und Kühlfahnen 22, welche aus einem Teil des äußeren Teilleiters 24 geformt sind. Die Kühlfahnen 22 vergrößern die Oberfläche des äußeren Teilleiters 24 nach außen hin, was sich vorteilhaft auf die Kühlung der stromdurchflossenen Erregerspule 2 auswirkt. Eine geringere Temperatur führt zu geringeren Verlusten in der Erregerspule 2, da der spezifische Widerstand von Kupfer mit der Temperatur steigt. Die Kühlfahnen 22 werden mit geeigneten Quetschwerkzeugen örtlich in regelmäßigen Abständen angebracht. Funktionsbereiche, wie beispielsweise Wicklungsstützen 17, werden dabei entsprechend ausgespart. Im Vergleich zur bisherigen Lösung, bei der die Erregerspule abwechselnd mit zwei unterschiedlich breiten Kupferleitern, einer Kühlwindung und einer Normalwindung, bewickelt wurde, ist der Aufwand zur Herstellung von Kühlfahnen 22 auf dem äußeren Teilleiter 24 wesentlich geringer und kostengünstiger.

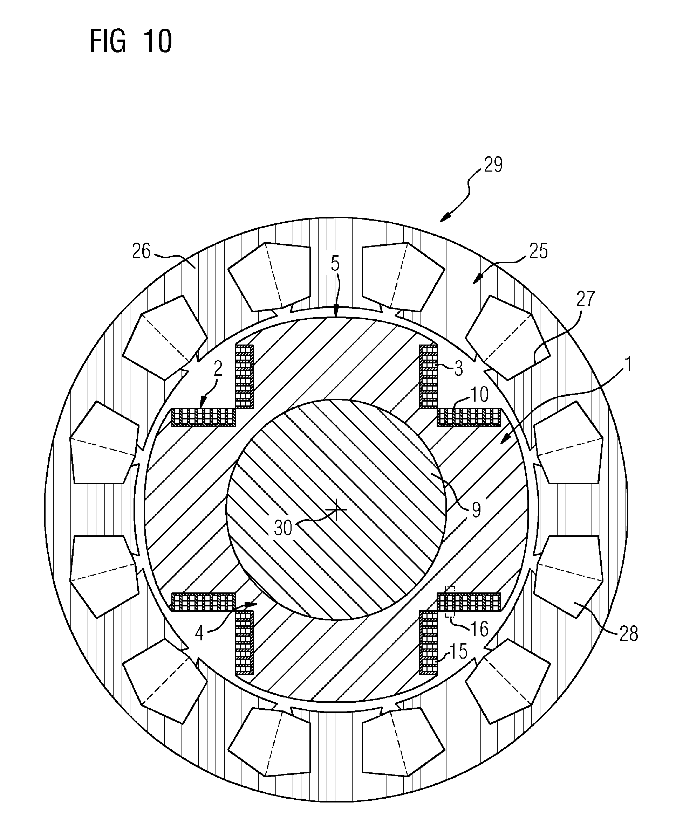

FIG 10 zeigt einen Querschnitt einer Synchronmaschine 29, welche einen Stator 25 und einen Rotor 1 aufweist. Der Stator weist ein Statorblechpaket 26 auf in welchem sich Nuten 27 befinden, in denen die Statorwicklungen 28 verlaufen. Der Rotor dreht sich um eine Rotationsachse 30. Der Aufbau des Rotors 1 entspricht im Wesentlichen dem aus FIG 8, wobei die Gesamtleiter 16 der Erregerspulen 2 aus 1x3 Teilleitern 15 aufgebaut sind und mit dem in FIG 4 gezeigten kontinuierlichen Wickel- und Lötverfahren hergestellt sind.

Zusammenfassend betrifft die Erfindung somit ein Verfahren zur Herstellung eines Rotors 1 für eine Synchronmaschine 29, aufweisend mindestens eine Erregerspule 2, wobei die mindestens eine Erregerspule 2 jeweils mindestens zwei Windungen 3 aufweist, welche aus mehreren parallelen elektrisch leitfähig verbundenen rechteckförmigen Teilleitern 15 bestehen. Damit der Rotor kostengünstig herzustellen ist und bei hohen Drehzahlen und den damit verbundenen hohen Fliehkraftbelastungen einsetzbar ist, wird vorgeschlagen die Erregerspule 2 mit einem kontinuierlichen Wickel- und Lötverfahren derart herzustellen, dass die mehreren parallelen rechteckförmigen Teilleiter 15 zuerst längsseitig lose zu einem Gesamtleiter 16 zusammengefügt werden, daraufhin der Gesamtleiter 16 zu einer Erregerspule 2 gewickelt wird und die Teilleiter 15 des Gesamtleiters 16 direkt nach der Wicklung kontinuierlich zu einer massiven Erregerspule 2 mit einem biegesteifen Gesamtleiter 16 zusammengelötet werden.

## Patentansprüche

1. Verfahren zur Herstellung eines Rotors (1) für eine Synchronmaschine (29), aufweisend mindestens eine Erregerspule (2), wobei die mindestens eine Erregerspule (2) jeweils mindestens zwei Windungen (3) aufweist, welche aus mehreren parallelen elektrisch leitfähig verbundenen rechteckförmigen Teilleitern (15) bestehen,
**dadurch gekennzeichnet, dass** die Erregerspule (2) mit einem kontinuierlichen Wickel- und Lötverfahren derart hergestellt wird, dass die mehreren parallelen rechteckförmigen Teilleiter (15) zuerst längsseitig lose zu einem Gesamtleiter (16) zusammengefügt werden, daraufhin der Gesamtleiter (16) zu einer Erregerspule (2) gewickelt wird und die Teilleiter (15) des Gesamtleiters (16) direkt nach der Wicklung kontinuierlich zu einer massiven Erregerspule (2) mit einem biegesteifen Gesamtleiter (16) zusammengelötet werden.

2. Verfahren nach Anspruch 1,
**dadurch gekennzeichnet, dass** die Wicklung der lose zusammengefügten Teilleiter (15) mit mindestens einem Wickeldorn (17) erfolgt.

3. Verfahren nach einem der Ansprüche 1 oder 2,
**dadurch gekennzeichnet, dass** die Teilleiter (15) mit einem Weichlotverfahren zusammengelötet werden.

4. Verfahren nach einem der Ansprüche 1 bis 3,
**dadurch gekennzeichnet, dass** die Teilleiter (15) während des kontinuierlichen Lötvorgangs von einer Formierungseinrichtung (19) positioniert und/oder zusammengehalten werden.

5. Verfahren nach einem der Ansprüche 1 bis 4,
**dadurch gekennzeichnet, dass** zwischen den mindestens zwei Windungen (3) eine Isolation (10) eingesetzt wird, welche einen hochspannungsfesten elektrisch isolierenden Kunststoff, insbesondere Aramid, aufweist und welche dafür geeignet ist, die mindestens zwei Windungen (3) gegeneinander zu isolieren.

6. Verfahren nach einem der Ansprüche 1 bis 5,
**dadurch gekennzeichnet, dass** die parallelen rechteckförmigen Teilleiter (15) aus Standardhalbzeugen, insbesondere aus Kupfer, hergestellt werden.

7. Verfahren nach einem der Ansprüche 1 bis 6,
**dadurch gekennzeichnet, dass** an mindestens einem äußeren Teilleiter (24) eine Kühlfahne (22) aus einem Teil des äußeren Teilleiters (24) geformt wird.

8. Verfahren nach Anspruch 7,
**dadurch gekennzeichnet, dass** die Kühlfahne (22) mit einem Quetschwerkzeug geformt wird.

9. Verfahren nach einem der Ansprüche 1 bis 8,
**dadurch gekennzeichnet, dass** zumindest ein Teil eines Polschuhs (5) und zumindest ein Teil eines Blechpakets (4) des Rotors (1) aus einem Stück hergestellt werden und die Erregerspule (2) direkt um das Blechpaket (4) mit dem Polschuh (5) gewickelt wird.

10. Rotor (1) für eine Synchronmaschine (29), welche mit einem Verfahren nach einem der Ansprüche 1 bis 9 herstellbar ist, aufweisend mindestens eine Erregerspule (2), wobei die Erregerspule (2) mehrere längsseitig elektrisch leitfähig verbundene rechteckförmige Teilleiter (15) aufweist und wobei jeder Teilleiter (15) einstückig ausgebildet ist.

11. Rotor (1) nach Anspruch 10,
wobei die Wicklungen (3) der Erregerspule (2) an den Ecken eine abgerundete Radiusform (21) aufweisen.

12. Synchronmaschine (29), welche mindestens einen Rotor nach einem der Ansprüche 10 oder 11 aufweist.
